# EUROPÄISCHE PATENTSCHRIFT

(11) **EP 3 657 120 B1**
(45) Veröffentlichungstag und Bekanntmachung des Hinweises auf die Patenterteilung: **10.07.2024**
(21) Anmeldenummer: 19211238.1
(22) Anmeldetag: 25.11.2019
(51) Int. Cl.: G01B 5/00, G01B 11/24, G01B 21/04

(54) **VORRICHTUNG UND VERFAHREN FÜR DIE VERMESSUNG VON OBJEKTEN**
APPARATUS AND METHOD FOR THE MEASUREMENT OF OBJECTS
DISPOSITIF ET PROCÉDÉ POUR LA MESURE D'OBJETS

(30) Priorität: 26.11.2018 DE 102018129766
(43) Veröffentlichungstag der Anmeldung: 27.05.2020
(73) Patentinhaber: Carl Zeiss GOM Metrology GmbH, 38122 Braunschweig (DE)
(72) Erfinder: Wambold, Witalij, 38124 Braunschweig (DE); Abo-Namous, Omar, 38259 Salzgitter (DE); Zimmermann, Alexander, 38116 Braunschweig (DE); Thesing, Jan, 38108 Braunschweig (DE)
(74) Vertreter: Gerstein, Hans Joachim

(56) Entgegenhaltungen:
- US-A- 4 604 813
- US-A1- 2007 261 259
- US-A1- 2012 297 828
- US-A1- 2017 283 189
- HAIYANG QUAN ET AL: "Model-based optimization of gravity sagging for a horizontally mounted optical flat", APPLIED OPTICS, vol. 55, no. 5, 10 February 2016 (2016-02-10), US, pages 993, XP055723858, ISSN: 0003-6935, DOI: 10.1364/AO.55.000993

## Beschreibung

Die Erfindung betrifft ein Verfahren zur spannungsarmen Aufnahme eines Objektes in einer Vorrichtung und ein Messsystem, das einen Sensor zur dreidimensionalen Vermessung eines Objektes und eine Vorrichtung zur Aufnahme des Objektes zur dreidimensionalen Vermessung mit mehreren Lagerpunkten zur Lagerung des Objektes hat und zur Durchführung des Verfahrens eingerichtet ist. Die Vorrichtung dient zur Aufnahme eines Objektes, um das Objekt mittels taktiler oder optischer Messmethoden zu vermessen.

Die Erfassung der 3D-Geometrie von Objekten ist eine typische Messaufgabe, die in zahlreichen Industrien zum Beispiel für Bauteile wie Bleche, Werkzeuge oder Spritzgussteile zum Einsatz kommt.

Ein bekanntes Messverfahren zur Erzeugung von die Oberfläche des Messobjektes beschreibenden 3D-Messdaten ist die topometrische Messung. Dazu wird das zu vermessende Objekt von einem Projektor mit einem Muster, insbesondere Streifenmuster, angestrahlt, das projizierte Muster mit einer oder mehreren Bildaufnahmeeinheiten aufgenommen und anschließend durch eine Auswerteeinheit ausgewertet.

Im Zuge der Qualitätskontrolle werden häufig die 3D-Messdaten mit der Sollgeometrie, beispielsweise einem CAD-Modell des Bauteils, verglichen, um Abweichungen des realen Bauteils (Ist-Geometrie) zur Sollgeometrie zu erkennen und Bauteile, die Abweichungen größer einer definierten Toleranz aufweisen, damit schon vor einer Weiterverarbeitung auszusortieren.

Bei eigensteifen Bauteilen kann die Einhaltung der Bauteilgeometrie in der Regel durch eine 3D-Vermessung des Bauteils überprüft werden. Bei nicht-eigensteifen Bauteilen, wie zum Beispiel Blech- oder Kunststoffteilen, gestaltet sich die Überprüfung des Bauteils sehr viel schwieriger, da sich das Bauteil leicht verformt und eine 3D-Vermessung ja nach Lagerung des Bauteils während der Vermessung ein anderes Ergebnis liefert. Das Bauteil erhält unter Umständen erst im montierten Zustand seine endgültige Form. Daher kann es vorkommen, dass Abweichungen von der Sollgeometrie ermittelt werden, die oberhalb einer Toleranzgrenze liegen, obwohl diese Abweichung für die Qualität der Produkte kein Problem darstellen, solange definierte Funktionsmaße, wie beispielsweise Abstände oder Durchmesser von Montagelöchern oder Verbindungsstiften eingehalten werden.

Nicht-eigensteife Bauteile können daher vor einer Vermessung zur Simulation des montierten Zustands in Spannvorrichtungen, sogenannte Fixtures, eingespannt werden. Die Fixture nimmt das Bauteil an vordefinierten Halte-/Spannpunkten auf. Das Bauteil wird an den Spannpunkten physikalisch gegen die Fixture gespannt. Dabei wird durch den Einspannprozess die spätere Einbausituation des Bauteils simuliert, so dass Funktionsmaße überprüft werden können. Da diese Spannvorrichtungen speziell an die Einbausituation und das spezielle Bauteil angepasst sein müssen, ist dieses Vorgehen aufwendig und kostenintensiv.

Eine andere Möglichkeit bieten Verfahren, die Messdaten eines nicht eigenstabilen Bauteils derart rechnergestützt zu verformen, dass ein eingespannter Zustand des Bauteils, beispielsweise die spätere Einbausituation, aus den Messdaten des nichteingespannten Bauteils simuliert wird. Zur Beurteilung des Bauteils, beispielsweise in der Qualitätssicherung, werden nicht mehr die ursprünglich ermittelten 3D-Messdaten, sondern die virtuell verformten 3D-Messdaten des virtuell eingespannten Objektes verwendet.

Haiyang Quan et. al: "Model based optimization of gravity sagging for a horizontally mounted optical flat", Applied Optics, Bd. 55, Nr. 5, 10. Februar 2016, Seite 993 beschreibt ein Verfahren zur modellbasierten Rekonstruktion von Schwerkraftabsenkung bei einer horizontal aufgenommenen optischen Fläche.

US 2012/0297828 A1 offenbart eine Vorrichtung zur Herstellung von Glasartikeln mit Vakuumaufnahmen für Glasplatten.

US 2017/0283189 A1 offenbart ein System zur Förderung von Objekten mit Rollen, die Vakuumöffnungen zum Ansaugen des zu fördernden Objektes haben.

US 4 604 813 A beschreibt eine Vorrichtung zum dreidimensionalen Untersuchen einer gebogenen Rohrleitung, die in einen Rollenträger eingespannt wird, der in den Innenraum der Rohrleitung eintaucht. Die Rohrleitung wird am gegenüberliegenden Ende in eine Aufnahme mit mehreren hintereinander angeordneten U-förmigen Aufnahmeöffnungen eingelegt.

US 2007/0261259 A1 offenbart ein System zur Positionierung und Vermessung von Objekten, das mit mehreren einstellbaren Lagerelementen gelagert wird. Die Lagerelemente können jeweils eine V-förmige Aufnahmeöffnung haben. In einer vorbekannten Lösung wird das Objekt an nur einem Lagerelement gehalten. Dies hat den Nachteil, dass das Objekt durch die Schwerkraft an den nicht gelagerten Bereichen absinken kann.

Aufgabe der Erfindung ist es ein Verfahren zur Verfügung zu stellen, das es ermöglicht, Messdaten eines Objektes, beispielsweise eines nicht-eigensteifen Bauteils, in einem spannungsfreien oder zumindest möglichst spannungsarmen Zustand zu erhalten und ein verbessertes Messsystem mit einer Vorrichtung zur Aufnahme eines Objektes, beispielsweise eine Bauteilaufnahme zur Aufnahme eines Bauteils, zu schaffen.

Die Aufgabe wird durch das Verfahren mit den Merkmalen des Anspruchs 1 und das Messsystem mit den Merkmalen des Anspruchs 5 gelöst. Vorteilhafte Ausführungsformen sind in den Unteransprüchen beschrieben.

Zur Lösung der Aufgabe wird vorgeschlagen das Objekt während der Vermessung in einer Vorrichtung zu lagern, die dazu geeignet ist, ein Objekt in einem definierten spannungsarmen Spannungszustand aufzunehmen und Objektbewegungen während der Vermessung zu verhindern. Die Messdaten des Objekts können dann virtuell derart verformt werden, dass ein definierter Spannungszustand, insbesondere ein spannungsfreier Zustand simuliert werden kann.

Voraussetzung für eine virtuelle Simulation des eingespannten Zustandes ist, dass das Bauteil spannungsfrei vermessen wird. Da das Bauteil aber während der Vermessung in irgendeiner Weise gelagert ist, beispielsweise in einer Bauteilaufnahme, ist eine spannungsfreie Vermessung nicht einfach zu gewährleisten. Durch eine statische Überbestimmtheit der Aufnahmesituation des Bauteils in der Bauteilaufnahme entstehen undefinierte Spannungszustände im Bauteil, so dass die Rückführung stets mit einem Fehler behaftet ist, der sich aus den Spannungen ergibt. Dies kann dadurch verhindert werden, dass die die Gesamtheit aller verwendeten Lagerpunkte zur Einschränkung der Bewegungsmöglichkeiten des Objektes mit einem statisch bestimmten System eingerichtet sind, bei dem eine Bewegung des Objektes innerhalb der Aufnahmevorrichtung ohne Einbringen von Spannungen in das Objekt durch die Lagerpunkte verhindert wird.

Besonders vorteilhaft ist es, wenn der gesamte Spannungszustand des Objekts während der Vermessung, lediglich Spannungen aufgrund der Gravitation aufweist.

Mit einem erfindungsgemäßen Messsystem, das eine Vorrichtung zur Aufnahme eines Objekts aufweist, im Folgenden auch als Bauteilaufnahme bezeichnet, und zur Durchführung des erfindungsgemäßen Verfahrens eingerichtet ist, wird ein definierter möglichst spannungsarmer Zustand des Objekts ermöglicht.

In vorteilhafter Weise ist die Bauteilaufnahme derart gestaltet, dass durch die Bauteilaufnahme selbst keine zusätzlichen Spannungen in das Bauteil eingebracht werden, so dass die im Bauteil vorhandenen Spannungen lediglich aus der Gewichtskraft resultieren. In einem rechnergestützten Verfahren können anschließend deterministisch die Spannungen aufgrund der Gewichtskraft bestimmt und in einem Korrekturverfahren die 3D-Messdaten des Bauteils rechnerisch in einem spannungsfreien Zustand simuliert werden.

Ein frei im Raum bewegliches Objekt besitzt drei Translations- und drei Rotationsfreiheitsgrade. Die Anzahl der Freiheitsgrade kann durch eine Einschränkung der Bewegungsmöglichkeiten eingeschränkt werden, beispielsweise kann ein Lagerpunkt einer Bauteilaufnahme, in der das Objekt aufgenommen wird, eine mögliche Translation in eine Richtung einschränken und somit die Zahl der Freiheitsgrade des Objekts reduzieren. Ist die verbleibende Zahl der Freiheitsgrade des Objekts genau gleich Null, so kann das Objekt genau eine Position einnehmen, es liegt ein statisch bestimmtes System vor. Wird das Objekt in einer Bauteilaufnahme in mehr als seinen ursprünglichen Freiheitsgraden eingeschränkt, so handelt es sich um ein statisch überbestimmtes System, in dem starke innere Spannungen auftreten können.

Um ein Bauteil in einem spannungsfreien Zustand zu messen, wird eine Bauteilaufnahme geschaffen, die das Bauteil genau in seinen Freiheitsgraden einschränkt, ohne überbestimmt zu sein. Damit werden durch die Bauteilaufnahme keine Spannungen in das Bauteil eingebracht, lediglich kann es durch die Gewichtskraft beispielsweise an Auflagepunkten zu Spannungseinträgen in das Objekt kommen. Die durch die Gewichtskraft entstehenden Spannungen können durch rechnergestützte Verfahren bestimmt werden und im Zuge einer virtuellen Verformung des Bauteils dazu genutzt werden einen spannungsfreien Zustand des Bauteils zu simulieren.

Beispielsweise kann die Bauteilaufnahme dafür derart gestaltet sein, dass sie das Bauteil an einem oder mehreren Lagerpunkten aufnimmt, wobei keine zwei Lagerpunkte dieselbe Gruppe von Freiheitsgraden beschränken. Dabei kann ein Lagerpunkt einen oder auch mehrere Freiheitsgrade beschränken.

Vorteilhaft ist es, wenn weniger als sechs Lagerpunkte verwendet werden, indem beispielsweise mindestens ein Lagerpunkt zwei voneinander unterschiedliche Freiheitsgrade einschränkt. Wichtig ist es, dass die Gesamtheit der Lagerpunkte der Bauteilaufnahme genau die vorhandenen Freiheitsgrade des Objekts einschränkt, also Objektbewegungen beispielsweise während einer Vermessung des Objektes verhindert, ohne durch eine überbestimmte Einschränkung der Freiheitsgrade Spannungen im Objekt zu verursachen.

In einer besonders vorteilhaften Ausführungsform der Bauteilaufnahme beinhaltet diese drei Lagerpunkte, die jeweils zwei unterschiedliche Freiheitsgrade einschränken, so dass mit den drei Lagerpunkten alle Freiheitsgrade des Objekts in Translations- und Rotationsrichtung eingeschränkt werden.

Erfindungsgemäß beinhaltet die Bauteilaufnahme Lagerpunkte, die mit Halteelementen und mit Elementen zur Druckluftabgabe ausgestattet sind. Die Halteelemente können verschiedenartig ausgestaltet sein. Die Halteelemente sind in einer besonders vorteilhaften Ausführungsform als Saugelemente, beispielsweise Saugnäpfe ausgestaltet, so dass sie sowohl das Bauteil durch Unterdruck ansaugen können, als auch beispielsweise mit Hilfe von Druckluft ein gelagertes Bauteil in ein sogenanntes Schweben bringen können. Die Druckluft wirkt dabei der Gewichtskraft entgegen und wird so gewählt, dass das Bauteil nicht mehr auf den Saugelementen aufliegt, aber nicht so stark, dass das Bauteil wegfliegt. Beim Schweben eines Teils auf einem Saugelement entsteht ein Luftkissen zwischen dem Saugelement und dem Messobjekt. Das Luftkissen sorgt dafür, dass zwischen dem Saugelement und dem Messobjekt nur zur Messobjektoberfläche orthogonal wirkende Reaktionskräfte übertragen werden können.

Besonders vorteilhaft ist es aber, wenn die Bauteilaufnahme drei Lagerpunkte miteinander kombiniert, die einerseits das Bauteil halten und andererseits durch Ausstoßen von Druckluft das Bauteil zum Schweben bringen können. Besonders vorteilhaft ist es, wenn die Lagerpunkte Saugelemente aufweisen, die eine Saugleitung aufweisen und durch Bildung von Unterdruck das Bauteil halten können. Die Saug- und Druckleitung können getrennt oder auch kombiniert ausgebildet sein.

Um das Bauteil spannungsarm durch die Bauteilaufnahme aufzunehmen, wird das Bauteil in einem ersten Schritt beliebig auf die Lagerpunkte gelegt und gehalten. Im nächsten Schritt, wird einer der Lagerpunkte gelöst und Druckluft durch ein entsprechend ausgebildetes Element des Lagerpunktes ausgestoßen. Das zur Druckluftabgabe ausgebildete Element kann dabei in einer vorteilhaften Weise kombiniert mit dem Saugelement ausgebildet sein. Durch die Abgabe von Druckluft in dem Lagerpunkt, löst das Bauteil die Verbindung zu diesem Lagerpunkt und kann dadurch vorhandene Spannungen abbauen. Danach wird die Druckluft wieder abgeschaltet und der Lagerpunkt nimmt das Bauteil wieder haltend, beispielsweise durch das Saugelement, auf. Dieser Vorgang wird nacheinander für weitere Lagerpunkte der Bauteilaufnahme durchgeführt, bis das Bauteil ausreichend entspannt ist, und in dem dann spannungsarmen Zustand in der Bauteilaufnahme aufgenommen und beispielsweise einer dreidimensionalen Vermessung zugeführt werden kann.

Da es Aufgabe der Bauteilaufnahme ist, Bauteile spannungsarm aufzunehmen, werden die Objekte in der Bauteilaufnahme nicht, wie dies aus anderen Spannvorrichtungen bekannt ist, an Spannpunkten eingespannt. Damit können die Objekte in der Bauteilaufnahme, zum Beispiel durch unbeabsichtigtes Berühren des Objekts, leicht verschoben werden, wodurch undefinierte Positionen während eines Vermessungsvorganges entstehen können. Zur besseren Stabilität der Objektausrichtung in der Bauteilaufnahme, können daher die Lagerpunkte beispielsweise elektromagnetisch ausgerüstet sein oder das Bauteil durch Unterdruck halten. Wichtig dabei ist, dass lediglich ein Verrutschen verhindert werden soll. Beispielsweise können die Lagerpunkte als gelagerte Saugelemente ausgestaltet sein.

In einer besonders vorteilhaften Weiterbildung der Bauteilaufnahme verfügt diese über Linear- und/oder Rotationsachsen, um so eine Positionierung des Objekts relativ zu einem Messsystem zu vereinfachen, mit dem das Objekt vermessen werden soll.

Ist das Objekt spannungsfrei in einer Bauteilaufnahme gelagert, so liefert eine Vermessung des Objekts, beispielsweise mit einem 3D-Scanner, Messdaten eines spannungsfreien Objektes. Diese Daten können anschließend zum Beispiel als Grundlage für ein Verfahren zum virtuellen Verformen von 3D-Messdaten dienen, um einen vorgegebenen gespannten Zustand des Objekts darzustellen.

Selbst wenn ein Bauteil von einer Bauteilaufnahme aufgenommen wird, die genau seine drei Translations- und seine drei Rotationsfreiheitsgrade einschränkt, wird dieses in der Realität nicht ganz spannungsfrei, sondern nur spannungsarm sein, da durch die Wirkung der Gravitation allein schon das Eigengewicht des Objektes Spannungen im Objekt hervorruft, ohne dass zusätzlich Spannkräfte an definierten Spannpunkten angreifen. Die Gewichtskraft, d.h. die durch die Wirkung des Gravitationsfeldes verursachte Kraft auf das Objekt, bewirkt an jedem Punkt des Objekts eine Verschiebung in Richtung der Gewichtskraft. Der Betrag der einwirkenden Gewichtskraft hängt ab von der Dichte des Materials, aus dem das Objekt besteht. Die Richtung der Gewichtskraft ist abhängig von der Richtung der Erdanziehung.

Vorteilhafterweise ist die Bauteilaufnahme also dazu geeignet, eine Lagerung des Objekts zu gewährleisten, bei der durch die Bauteilaufnahme keine zusätzlichen Spannungen in das Objekt eingebracht werden, und die durch die Gewichtskraft entstehenden Spannungen durch rechnergestützte Verfahren bestimmt werden können. Die bekannten Spannungen des Objekts können dann in einem weiteren Verfahrensschritt, beispielsweise im Zuge einer virtuellen Verformung der Messdaten des Bauteils genutzt werden, um Messdaten des Bauteiles in einem simulierten spannungsfreien Zustand zu erhalten.

Für das Verfahren der rechnergestützten Errechnung eines spannungsfreien Zustandes des Objekts aus Messdaten des Objekts, beispielsweise den Messdaten einer dreidimensionalen optischen Vermessung nach einem topometrischen Messverfahren, wie dem Prinzip der Streifenlichtprojektion, wird auch die Lage und Orientierung der Lagerpunkte der Bauteilaufnahme in Bezug zum Objekt benötigt. Die Lage und Orientierung der Lagerpunkte hat Einfluss auf die in der Berechnung des spannungsfreien Objektzustands einfließenden lokalen Freiheitsgradeinschränkungen.

Vorteilhafterweise wird vorgeschlagen, die Lagerpunkte in einem gemeinsamen Messprozess der Vermessung des Objektes, also beispielsweise der dreidimensionalen optischen Erfassung mit einem topometrischen Messsystem, m itzuerfassen.

Besonders vereinfacht wird dies durch den Einsatz eines optischen Messsystems, wenn die Lagerpunkte durch optisch erfassbare Merkmale erfasst werden können. Beispielsweise können die optisch erfassbaren Merkmale Messmarken sein, die sich in der Nähe des Lagerpunktes befinden. Durch eine Einmessung der Bauteilaufnahme wird die Lage der Messmarken zum Lagerpunkt bestimmt, so dass es bei einer Vermessung eines Objektes in der Bauteilaufnahme reicht, die Position der Messmarke zu erfassen um auf die Position des Lagerpunktes, der üblicherweise optisch vom Objekt verdeckt wird, zu schließen. Auch weiter vom Lagerpunkt entfernte erfassbare Merkmale können genutzt werden, solange durch einen Einmessvorgang die relative Lage und Orientierung von Merkmal und Lagerpunkt bestimmt wurden.

Die Erfindung wird nachfolgend anhand von nicht einschränkenden Ausführungsbeispielen mit den beigefügten Zeichnungen näher erläutert. Es zeigt:
- Figur 1 -: Bauteil auf einem Lagerpunkt, der in allen 6 Freiheitsgraden festhält;
- Figur 2 -: Bauteil auf drei Lagerpunkten als 3-2-1 Einspannung;
- Figur 3 -: Bauteil auf sechs Lagerpunkten;
- Figur 4 -: Bauteil auf drei Lagerpunkten als 2-2-2-Einspannung;
- Figur 5 -: Bauteil auf drei Lagerpunkten als 2-2-2-Einspannung mit radialer Anordnung;
- Figur 6 -: 3D-Ansicht einer nicht erfindungsgemäßen Rollenauflage mit optisch erfassbaren Merkmalen;
- Figur 7 -: Beispielhafte Ausführungsform einer erfindungsgemäßen Bauteilaufnahme mit Saug-Druck-Elementen
- Figur 8 -: Beispielhafter Ablauf eines Verfahrens.

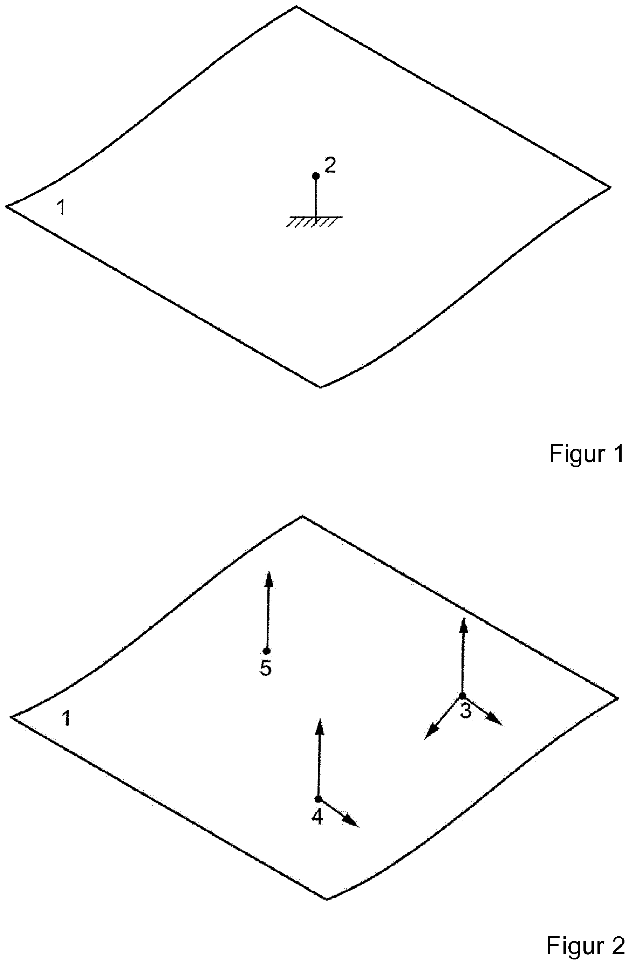

Figur 1 zeigt eine schematische Darstellung eines Bauteils 1, das an einem Lagerpunkt 2 gehalten wird. Die Bauteilaufnahme, hier nur symbolisch angedeutet, blockiert dabei im Lagerpunkt 2, genau die sechs möglichen Freiheitsgrade des Bauteils. Es werden im Lagerpunkt 2 Verschiebungen in allen drei Richtungen, als auch Verdrehungen um alle drei Rotationsachsen unterbunden.

Figur 2 zeigt symbolisch ein Bauteil 1, das in einer Bauteilaufnahme an drei Lagerpunkten gehalten wird, wobei die Lagerpunkte 3, 4, 5 das Bauteil 1 jeweils in einer unterschiedlichen Anzahl von Freiheitsgraden einschränken. Die Bewegungseinschränkungen an den jeweiligen Lagerpunkten 3, 4, 5 sind durch Pfeile symbolisiert.

Der Lagerpunkt 3 beschränkt das Bauteil 1 in drei Freiheitsgraden. Beispielsweise ist der Lagerpunkt 3 ein gummierter Auflagepunkt. Das Bauteil 1 wird am Lagerpunkt 3 der Art gehalten, dass alle Verschiebungen unterbunden werden. Das Bauteil 1 kann sich aber weiterhin dank der verbliebenen drei Rotationsfreiheitsgrade in allen drei Raumrichtungen verdrehen. Durch die zusätzliche Lagerung des Bauteils 1 im Lagerpunkt 4, werden zwei weitere Freiheitsgrade eingeschränkt. Beispielsweise kann Lagerpunkt 4 in Form einer Rollenauflage ausgeführt werden. Das Bauteil 1 kann sich nur noch um eine Rotationsachse drehen, die durch die Lagerpunkte 3 und 4 geht. Der Lagerpunkt 5 sperrt den letzten verbliebenen Freiheitsgrad.

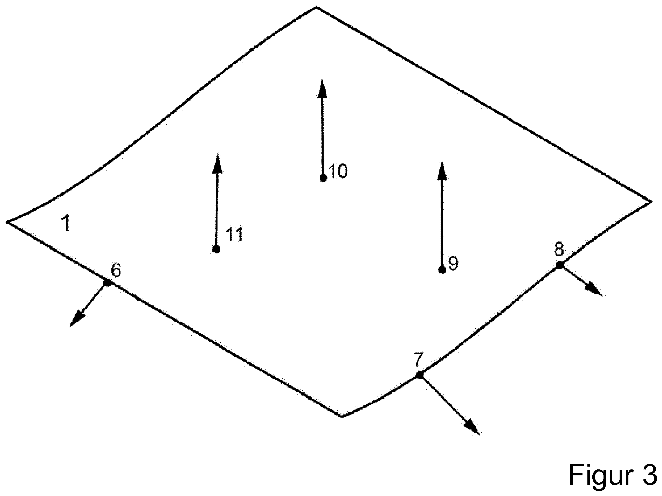

Figur 3 zeigt eine schematische Darstellung eines Bauteils 1, das an sechs Lagerpunkten 6, 7, 8, 9, 10, 11 in einer Bauteilaufnahme gehalten wird. Jeder Lagerpunkt 6, 7, 8, 9, 10, 11 ist dabei der Art gestaltet, dass er eine Bauteilbewegung in einer, durch die Pfeile symbolisch dargestellte, Bewegungsrichtung unterdrückt. Das Bauteil 1 ist in sechs Freiheitsgraden eingeschränkt.

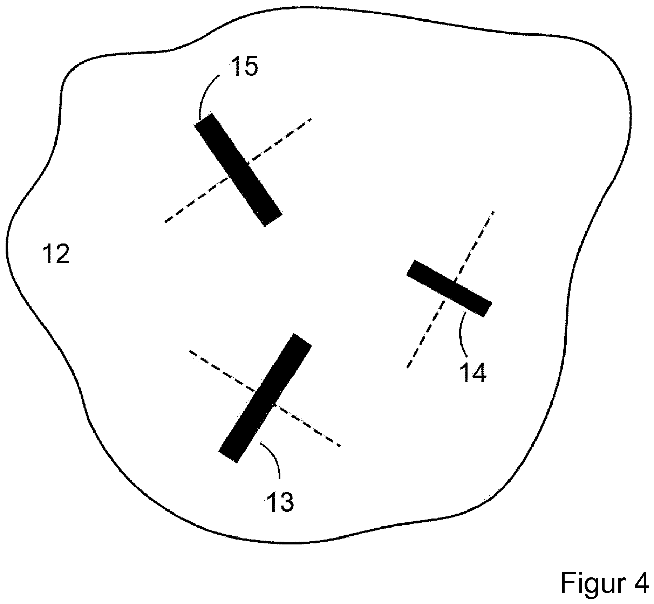

Figur 4 zeigt eine Aufsicht auf ein Bauteil 12, das in einer Bauteilaufnahme an drei Lagerpunkten 13, 14, 15 gehalten wird. Die Lagerpunkte 13, 14, 15 sind in der hier gezeigten schematischen Darstellung nicht erfindungsgemäß als unterschiedlich große Rollen ausgebildet, die sich um die gestrichelt dargestellten Drehachsen drehen können. Jeder der Lagerpunkte 13, 14, 15 schränkt das Bauteil 12 in zwei Freiheitsgraden ein.

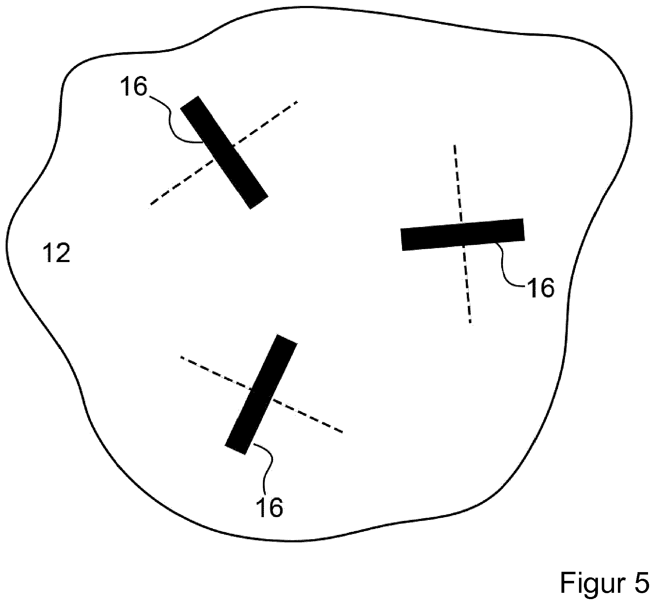

Figur 5 zeigt eine weitere Ausführungsform einer Bauteilaufnahme in einer Aufsicht. Die Bauteilaufnahme verfügt über drei Lagerpunkte 16 in Form von Rollen, wobei die Rollen 16 im dargestellten nicht erfindungsgemäßen Beispiel alle die gleiche Größe aufweisen, und radial zueinander angeordnet sind. Das Bauteil 12 wird durch die drei Lagerpunkte 16 aufgenommen, wobei die Lagerpunkte 16, hier in Form von Rollen, jeweils zwei Freiheitsgrade des Bauteils 12 einschränken.

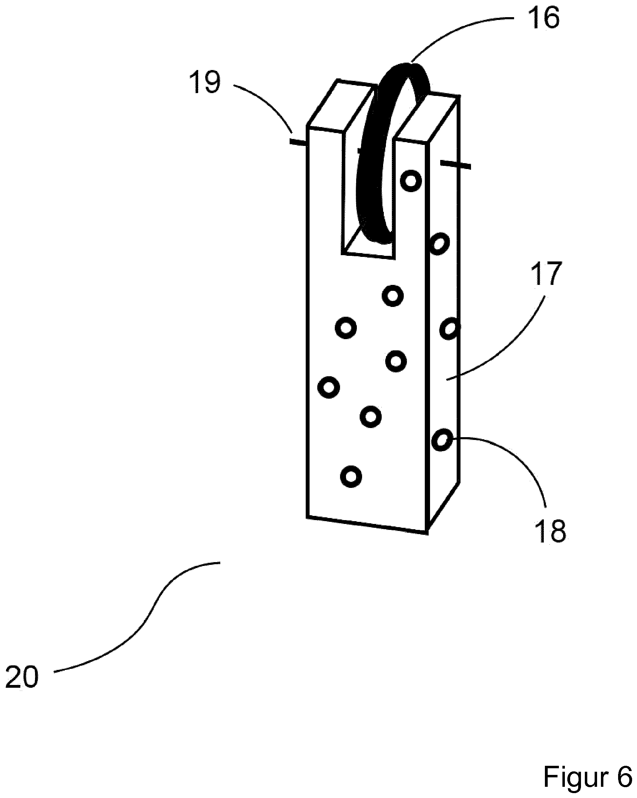

Die Rollen 16 der Bauteilaufnahme sind beispielsweise nicht erfindungsgemäß, wie in Figur 6 gezeigt jeweils einzeln in einer Rollenauflage 20 in einer Lagerhalterung 17 gehalten und um eine Drehachse 19 drehbar. Besonders vorteilhaft ist es, wenn jede Rolle 16, in einer separaten Rollenauflage 20 gelagert wird, wodurch sich die einzelnen Rollen 16 der Bauteilaufnahme je nach Größe und Form des Bauteils einfach in angepassten Positionen zueinander anordnen lassen. Die in Figur 5 beispielhaft dargestellte Bauteilaufnahme könnte dann drei einzelne Rollenauflagen 20 haben, die variabel zueinander positionierbar sind. Ist die Bauteilaufnahme dazu gedacht, zum Beispiel immer wieder Bauteile 12 ähnlicher Form aufzunehmen, können die einzelnen Rollenauflagen 20 auch fest miteinander, zum Beispiel durch eine gemeinsame Bodenplatte verbunden werden. Die in Figur 6 dargestellte Rollenauflage 20 weist Referenzmerkmale 18 in Form von Referenzmarken auf der Lagerhalterung 17 auf. Sind die Geometriedaten der Rollenauflage 20 inklusive der Rollen 16 und der Referenzmerkmale 18 bekannt, zum Beispiel indem in einem Einmessvorgang die Rollenauflage 20, die Rollen 16 und die Referenzmerkmale 18 optisch vermessen wurden, so kann aus einer Bestimmung der Position der Referenzmerkmale 18 auf die Position des Lagerpunktes 16 geschlossen werden.

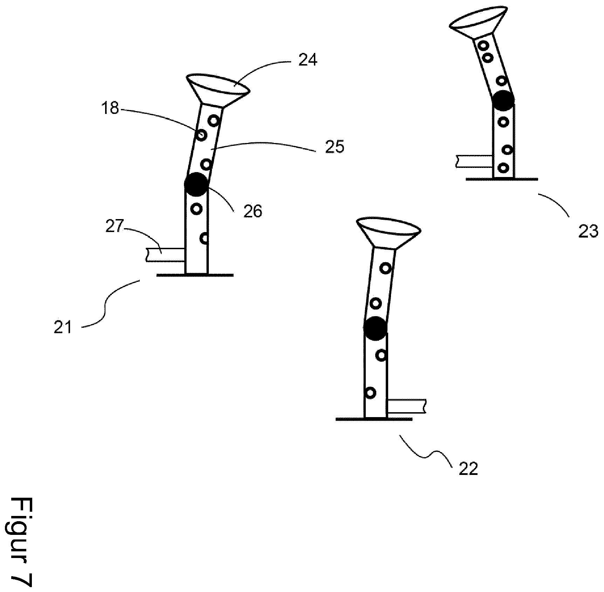

Die Figur 7 zeigt eine erfindungsgemäße Ausführungsform einer Bauteilaufnahme. Die Bauteilaufnahme hat im dargestellten Beispiel drei Lagerpunkte 21, 22, 23. Diese Lagerpunkte 21, 22, 23 sind mit Saugelementen 24 ausgestattet. Über eine Saugleitung 27 kann im Saugelement 24 ein Unterdruck zwischen Saugelement 24 und Bauteil erzeugt werden. Die Saugleitung 27 ist dabei hier nur schematisch als Zuführung zum Lagerpunkt 21, 22, 23 dargestellt und kann auch noch innerhalb des Lagerpunktes 21, 22, 23 weiter verlaufen, beispielsweise bis zum Saugelement 24. Zusätzlich verfügt jeder Lagerpunkt 21, 22, 23 über die Möglichkeit mit Hilfe einer Druckluftleitung 27 Druckluft auszustoßen. Die Druckluftstärke ist dabei regulierbar, so dass bei Druckluftbetrieb ein Schweben des Bauteils erreicht werden kann. Druckluftleitung 27 und Saugleitung 27 können dabei wir im dargestellten Beispiel kombiniert und innenliegend ausgeführt sein. Es ist aber auch möglich getrennte Leitungen zu verwenden, wobei diese sowohl kombiniert innerhalb des Saugelementes 24 angeordnet sein können, oder aber auch kann sich die Druckluftleitung 27 separat neben dem Saugelement 24 befinden. Die Lagerpunkte 21, 22, 23 haben Referenzmerkmale 18 in Form von Referenzmarken. In der hier dargestellten beispielhaften Ausführungsform verfügen die Lagerpunkte 21, 22, 23 auch noch über Gelenke 26, die es ermöglichen das Saugelement 24 in eine gewünschte Richtung auszurichten.

Zur Vermessung wird das Bauteil zuerst beliebig auf die Saugelemente 24 der drei Lagerpunkte 21, 22, 23 gelegt und mit Unterdruck festgehalten. Danach wird bei einem Saugelement 24, beispielsweise des Lagerpunktes 21 der Unterdruck abgeschaltet und stattdessen Druckluft eingeführt. Das Bauteil wird oberhalb des Lagerpunktes 21 in einen Schwebezustand gebracht. Durch das Schweben des Bauteils auf dem Lagerpunktes 21 können sich eventuell vorhanden Spannung zu den anderen Lagerpunkten 22, 23 ausgleichen. Das Bauteil entspannt sich. Anschließend wird die Druckluft eingestellt und wieder Unterdruck unter dem Saugelement 24 des Lagerpunktes 21 erzeugt. Dieser Vorgang, des Wechsels von Ansaugen und Schweben, wird anschließend für weitere Lagerpunkte, beispielsweise Lagerpunkt 22 wiederholt. Dies kann solange für verschiedene Lagerpunkte 21, 22, 23 durchgeführt werden, bis das Bauteil einen ausreichend entspannten Zustand erreicht hat. Dann werden alle Saugelemente 24, der Lagerpunkte 21, 22, 23 aktiviert und die Vermessung des Bauteils kann beginnen. Dieser Haltezustand entspricht einer statisch bestimmten Lagerung, da die Saugelemente 24 keine zusätzlichen Kräfte außer den durch die Gravitation verursachten Kräften aufbringen. Man kann es so formulieren, als ob der statisch bestimmte (auf den Saugern schwebende) Zustand eingefroren wurde.

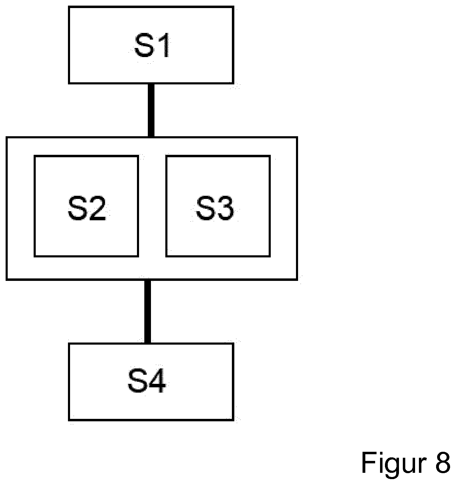

Als nächstes soll, unter Bezugnahme auf Figur 8 der Ablauf eines Verfahrens zum Erhalt von Messdaten eines Objekts in einem spannungsfreien Zustand beispielhaft erläutert werden.

Zuerst (Schritt S1) wird das Objekt, beispielsweise ein Bauteil, in einer Bauteilaufnahme, aufgenommen. Die Bauteilaufnahme verfügt dabei über mindestens einen Lagerpunkt, und ist dazu geeignet ist, das Objekt in einem definierten spannungsarmen Zustand aufzunehmen. Die Bauteilaufnahme nimmt das Bauteil mit Hilfe der Lagerpunkte so auf, dass Objektbewegungen innerhalb der Bauteilaufnahme verhindert werden, aber durch die Bauteilaufnahme keine Spannungen in das Objekt eingebracht werden.

In Schritt S2 erfolgt die dreidimensionale Vermessung des Objekts. Im Idealfall wäre ein Bauteil 12, das in einer Bauteilaufnahme, beispielsweise nach dem Prinzip der Figur 5, gelagert ist, spannungsfrei. In der Realität wirkt aber eine Gewichtskraft auf das Bauteil 12. In einem rechnerischen Verfahren kann der Einfluss der Gewichtskraft auf das Bauteil 12 durch Simulationsmethoden aus den Messdaten des Bauteils 12 herausgerechnet werden, um virtuelle Messdaten des Bauteils im spannungsfreien Zustand zu erhalten. Dafür ist es notwendig, die Angriffspunkte der Gewichtskraft zu kennen. Dieser Angriffspunkt kann mit Hilfe der Position der Lagerpunkte bestimmt werden, die dazu in Schritt S3 erfasst wird.

Die Schritte S2 "Vermessung des Objekts" und S3 "Erfassung der Lagerpunkte" können dabei auch in umgekehrter Reihenfolge oder im gleichen Vermessungsprozess erfolgen.

Um die Position der Lagerpunkte 16 und der Messdaten zueinander besonders einfach zu bestimmen, ist es vorteilhaft, direkt bei der Vermessung des Bauteiles 12 auch die Position der Lagerpunkte 16 zu bestimmen. Um diesen Vorgang besonders einfach zu gestalten, sind beispielsweise, wie in Figur 6 gezeigt, Referenzmerkmale 18 auf der Lagerhalterung 17 angebracht. Die in Figur 6 dargestellten Referenzmerkmale 18 in Form von Referenzmarken sind beispielhaft, andere Ausführungsformen sind denkbar. So können die Referenzmerkmale 18 auf verschiedene Weise an der Lagerhaltung 17 angebracht oder auch speziell ausgebildete Teile der Lagerhalterung 17 sein, auch können die Referenzmerkmale 18 Kodierungen enthalten. Wurden einmal in einem Einmessvorgang die Geometriedaten beispielsweise der Rollenauflage 20 inklusive der Referenzmerkmale 18 erfasst, so reicht es bei einer Vermessung eines Bauteils 12, wenn Referenzmerkmale 18 der Rollenauflage miterfasst werden, da dadurch aus den bekannten Einmessmaßen der Rollenauflage 20 auf die Rolle 16 geschlossen werden kann. Dies gilt beispielsweise auch für die in Figur 7 gezeigten Lagerpunkte 21, 22, 23. Auch hier kann, bei bekannter Geometrie der Lagerpunkte 21, 22, 23 durch eine Erfassung der Referenzmerkmale 18 auf die Position der Saugelemente 24 und damit auf die Angriffspunkte der Gewichtskraft geschlossen werden.

Aus den gewonnenen Daten, kann dann mit Hilfe von rechnergestützten Verfahren in Schritt S4 ein Modell des Bauteils 1, 12 im spannungslosen Zustand berechnet werden. Dieses Modell kann dann dazu genutzt werden, weitere Auswertungen des Bauteils 1, 12, wie Größen oder Abstandsmessungen vorzunehmen, oder es kann beispielsweise auch als Grundlage dienen, um einen speziell gespannten Zustand des Bauteils 1, 12 zu simulieren.

Beispielsweise kann die Errechnung eines spannungslosen Zustands des Objekts aus den Messdaten, der Positionen und Orientierungen der Lagerpunkte, sowie eines Modells des Bauteils, das zur Berechnung geeignet ist, erfolgen, wobei die Lagerpunkte aus den Messdaten erkannt und entsprechende lokale Freiheitsgradeinschränkungen des Bauteils in einem Modell vorgesehen werden.

## Patentansprüche

1. Verfahren zur Aufnahme eines Objektes (1, 12) in einer Vorrichtung, aufweisend folgende Schritte:
a) Aufnehmen des Objektes (1, 12) in einer Vorrichtung, die Lagerpunkte (2-11, 13-15, 21-23) hat, die zur Lagerung des Objektes (1, 12) mit Hilfe eines Halteelementes und zur Abgabe von Druckluft ausgebildet sind;
b) Lösen des Halteelementes an einem dieser zur Lagerung des Objektes (1, 12) mit Hilfe eines Halteelementes und zur Abgabe von Druckluft ausgebildeten Lagerpunkte (2-11, 13-15, 21-23) der Vorrichtung und Abgabe von Druckluft an diesem Lagerpunkt (2-11, 13-15, 21-23);
c) Abschaltung der Druckluft an diesem Lagerpunkt (2-11, 13-15, 21-23) und Schließen des Haltelementes des Lagerpunktes (2-11, 13-15, 21-23); **gekennzeichnet durch**
d) Wiederholen der Schritte b) und c) für weitere Lagerpunkte (2-11, 13-15, 21-23) die zur Lagerung des Objektes (1, 12) mit Hilfe eines Halteelementes und zur Abgabe von Druckluft ausgebildet sind.

2. Verfahren nach Anspruch 1 mit den folgenden weiteren Schritten:
e) Dreidimensionales Vermessen des Objektes (1, 12);
f) Erfassen der Lagerpunkte (2-11, 13-15, 21-23) der Vorrichtung;
g) Errechnen eines spannungslosen Zustands des Objekts (1, 12) aus den Messdaten des Objektes (1, 12) und der Position und Orientierung der Lagerpunkte (2-11, 13-15, 21-23).

3. Verfahren nach Anspruch 2, wobei eine Bestimmung der Lage und Orientierung der Lagerpunkte (2-11, 13-15, 21-23) durch eine Erfassung von eingemessenen erfassbaren Merkmalen der Vorrichtung erfolgt.

4. Verfahren nach Anspruch 2 oder 3, wobei die Erfassung der Lagerpunkte (2-11, 13-15, 21-23) und die Dreidimensionale Vermessung des Objektes (1, 12) im selben Prozess erfolgen.

5. Messsystem, das einen Sensor zur dreidimensionalen Vermessung eines Objektes (1, 12) und eine Vorrichtung zur Aufnahme des Objektes (1, 12) zur dreidimensionalen Vermessung mit mehreren Lagerpunkten (2-11, 13-15, 21-23) zur Lagerung des Objektes (1, 12) hat, wobei die Lagerpunkte (2-11, 13-15, 21-23) ein Element zur Abgabe von Druckluft und ein Halteelement aufweisen,
**dadurch gekennzeichnet, dass**
das Messsystem zur Durchführung eines Verfahrens nach einem der Ansprüche 1 bis 4 ausgestaltet ist.

6. Messsystem nach Anspruch 5, **dadurch gekennzeichnet, dass** das Halteelement ein Saugelement oder ein elektromagnetisches Element ist.

7. Messsystem nach Anspruch 5 oder 6, **dadurch gekennzeichnet, dass** das Halteelement und das Element zur Abgabe von Druckluft zwei separate Elemente sind.

8. Messsystem nach Anspruch 5 oder 6, **dadurch gekennzeichnet, dass** das Halteelement und das Element zur Abgabe von Druckluft kombiniert als ein Element ausgebildet sind.

9. Messsystem nach einem der Ansprüche 5 bis 8, **dadurch gekennzeichnet, dass** die Vorrichtung über eine oder mehrere Linear- und Rotationsachsen zur Gesamtverschiebung der Vorrichtung verfügt.

## Claims

1. Method for holding an object (1, 12) in a device, comprising the following steps:
a) holding the object (1, 12) in a device which has bearing points (2-11, 13-15, 21-23) which are designed to support the object (1, 12) with the aid of a holding element and to discharge compressed air;
b) releasing the holding element at one of these bearing points (2-11, 13-15, 21-23) of the device, which are formed for mounting the object (1, 12) with the aid of a holding element and for discharging compressed air, and discharging compressed air at this bearing point (2-11, 13-15, 21-23);
c) switching off the compressed air at this bearing point (2-11, 13-15, 21-23) and closing the retaining element of the bearing point (2-11, 13-15, 21-23);
**characterised by**
d) repeating steps b) and c) for further bearing points (2-11, 13-15, 21-23) which are designed for bearing the object (1, 12) with the aid of a holding element and for discharging compressed air.

2. Method according to claim 1 with the following further steps:
e) three-dimensional measurement of the object (1, 12);
f) detecting the bearing points (2-11, 13-15, 21-23) of the device;
g) calculating an unstressed state of the object (1, 12) from the measurement data of the object (1, 12) and the position and orientation of the bearing points (2-11, 13-15, 21-23).

3. Method according to claim 2, wherein the position and orientation of the bearing points (2-11, 13-15, 21-23) are determined by detecting measured detectable features of the device.

4. Method according to claim 2 or 3, wherein the detection of the bearing points (2-11, 13-15, 21-23) and the three-dimensional measurement of the object (1, 12) are carried out in the same process.

5. Measuring system which has a sensor for three-dimensional measurement of an object (1, 12) and a device for receiving the object (1, 12) for three-dimensional measurement with a plurality of bearing points (2-11, 13-15, 21-23) for bearing the object (1, 12), the bearing points (2-11, 13-15, 21-23) having an element for discharging compressed air and a holding element, **characterised in that** the measuring system is designed to carry out a method according to one of claims 1 to 4.

6. Measuring system according to claim 5, **characterised in that** the holding element is a suction element or an electromagnetic element.

7. Measuring system according to claim 5 or 6, **characterised in that** the holding element and the element for emitting compressed air are two separate elements.

8. Measuring system according to claim 5 or 6, **characterised in that** the holding element and the element for emitting compressed air are combined as one element.

9. Measuring system according to one of claims 5 to 8, **characterised in that** the device has one or more linear and rotational axes for the overall displacement of the device.

## Revendications

1. Procédé de réception d'un objet (1, 12) dans un dispositif, comprenant les étapes suivantes consistant à :
a) recevoir l'objet (1, 12) dans un dispositif qui présente des points de support (2-11, 13-15, 21-23) conçus pour supporter l'objet (1, 12) à l'aide d'un élément de retenue et pour distribuer de l'air comprimé ;
b) desserrer l'élément de retenue au niveau de l'un desdits points de support (2-11, 13-15, 21-23) du dispositif, conçus pour supporter l'objet (1, 12) à l'aide d'un élément de retenue et pour distribuer de l'air comprimé, et distribuer de l'air comprimé au niveau dudit point de support (2-11, 13-15, 21-23) ;
c) couper l'air comprimé au niveau dudit point de support (2-11, 13-15, 21-23) et fermer l'élément de retenue du point de support (2-11, 13-15, 21-23) ;
**caractérisé par**
d) la répétition des étapes b) et c) pour d'autres points de support (2-11, 13-15, 21-23) conçus pour supporter l'objet (1, 12) à l'aide d'un élément de retenue et pour distribuer de l'air comprimé.

2. Procédé selon la revendication 1, comprenant les autres étapes suivantes consistant à :
e) mesurer l'objet (1, 12) en trois dimensions ;
f) détecter les points de support (2-11, 13-15, 21-23) du dispositif ;
g) calculer un état sans contrainte de l'objet (1, 12) à partir des données de mesure de l'objet (1, 12) et de la position et de l'orientation des points de support (2-11, 13-15, 21-23).

3. Procédé selon la revendication 2,
dans lequel une détermination de la position et de l'orientation des points de support (2-11, 13-15, 21-23) est effectuée par détection de caractéristiques mesurées détectables du dispositif.

4. Procédé selon la revendication 2 ou 3,
dans lequel la détection des points de support (2-11, 13-15, 21-23) et la mesure en trois dimensions de l'objet (1, 12) sont effectuées dans le même processus.

5. Système de mesure comprenant un capteur, destiné à mesurer en trois dimensions un objet (1, 12), et un dispositif destiné à recevoir l'objet (1, 12) pour la mesure en trois dimensions et présentant plusieurs points de support (2-11, 13-15, 21-23) pour supporter l'objet (1, 12), les points de support (2-11, 13-15, 21-23) comprenant un élément de distribution d'air comprimé et un élément de retenue, **caractérisé en ce que** le système de mesure est conçu pour mettre en oeuvre un procédé selon l'une des revendications 1 à 4.

6. Système de mesure selon la revendication 5,
**caractérisé en ce que** l'élément de retenue est un élément d'aspiration ou un élément électromagnétique.

7. Système de mesure selon la revendication 5 ou 6,
**caractérisé en ce que** l'élément de retenue et l'élément de distribution d'air comprimé sont deux éléments distincts.

8. Système de mesure selon la revendication 5 ou 6,
**caractérisé en ce que** l'élément de retenue et l'élément de distribution d'air comprimé sont réalisés en étant combinés en un seul élément.

9. Système de mesure selon l'une des revendications 5 à 8,
**caractérisé en ce que** le dispositif dispose d'un ou plusieurs axes linéaires et de rotation pour le déplacement global du dispositif.
